# FASCICULE DE BREVET EUROPEEN

(11) **EP 0 443 950 B1**
(45) Date de publication et mention de la délivrance du brevet: **29.12.1993**
(21) Numéro de dépôt: 91400454.4
(22) Date de dépôt: 20.02.1991
(51) Int. Cl.: B28B 3/02, B22F 5/00, C04B 35/52

(54) **Dispositif de moulage en matériau composite pour le pressage à chaud de pièces en matériau réfractaire**
Formvorrichtung aus Verbundmaterial zum Heisspressen von Gegenständen aus feuerfestem Werkstoff
Moulding device of composite material for the hot-pressing of articles from refractory material

(30) Priorité: 23.02.1990 FR 9002237
(43) Date de publication de la demande: 28.08.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Benoit, Joel Michel Daniel, F-77240 Cesson la Forêt (FR); Bessenay, Gilles Jean-Michel, F-75017 Paris (FR); Girault, Daniel Georges, F-77000 Melun (FR)
(74) Mandataire: Berrou, Paul

(56) Documents cités:
- EP-A- 0 339 606
- DE-A- 2 017 402
- DE-A- 2 343 680
- DE-A- 2 731 535
- FR-A- 1 437 245
- FR-A- 2 532 585
- GB-A- 1 314 677
- US-A- 2 420 003

## Description

L'invention concerne un dispositif de moulage en matériau composite pour pressage à chaud de pièces en matériau réfractaire.

Les procédés connus de mise en forme de pièces en matériaux réfrataires, notamment composites et plus particulièrement des pièces en matériaux céramiques destinées à des applications sur moteurs aéronautiques, prévoient généralement une opération de pressage à chaud réalisable dans un four-presse à haute température. Divers moyens de chauffage peuvent équiper ces fours, soit pour un chauffage par rayonnement, soit pour un chauffage par induction, éventuellement avec suscepteur, la propagation thermique se faisant à partir de l'extérieur vers le centre.

Classiquement, l'ensemble de pressage proprement dit est envisagé selon une conception dite monobloc dans laquelle l'ébauche de pièce à obtenir est placée entre deux matrices qui, pour des applications exigeant des températures comprises par exemple entre 1200°C et 2200°C et l'enceinte étant placée sous vide ou sous atmosphère neutre, sont en graphite. Cependant, au cours d'essais de chauffage à haute température (1400°C par exemple) de matériaux réfractaires, des écarts de température supérieurs à 200°C entre le bord externe et le centre de la pièce peuvent être observés. Ce gradient thermique radial est de façon générale inacceptable pour la qualité des pièces à obtenir. Une recherche d'homogénéisation des températures par isolation conduit à allonger excessivement les durées de cycle et rend de toutes façons impossible d'obtenir les vitesses de refroidissement nécessaires après pressage, pour certains matériaux et qui peuvent atteindre de l'ordre de 1200°C par heure dans certains cas, pour obtenir des conditions équivalentes à une trempe à l'huile.

Le respect de ces vitesses de refroidissement amène à prévoir un moule séparé dans lequel est placée l'ébauche et qui permet le pressage entre les matrices du four-presse comme décrit ci-dessus. Dans ce cas, le moule contenant le matériau pressé peut être extrait du four et rapidement refroidi.

Les techniques connues actuelles, à titre d'exemple, pour la mise en forme de pièces en matériaux composites céramiques du type à fibres SiC et matrice en verre et pour les gammes de températures et conditions de mise en oeuvre associées (enceinte sous vide ou sous atmosphère neutre) comportent l'utilisation de matrices et d'un moule séparé en graphite. Des essais ont montré que les gradients thermiques, notamment dans une direction radiale, entre un bord extérieur et le centre, restent trop importants et incompatibles avec une mise en oeuvre satisfaisante correspondant aux critères de qualité des résultats à obtenir.

On connaît par ailleurs par FR-A-2 532 585 un exemple de pilotage des températures d'un moule utilisé pour pressage à chaud en vue d'obtenir une homogénéisation des températures du moule. Mais cette solution utilisant un moule en matériau électriquement conducteur associé à un moyen de chauffage par générateur de champ d'ondes progressives reste limitée à des applications à basse température, notamment dans le domaine des caoutchoucs qui est éloigné des objectifs de la présente invention, notamment du point de vue des caractéristiques du matériau mis en oeuvre et des conditions thermiques de cette mise en oeuvre.

On connaît en outre par **DE-A-2** **343** **680** un dispositif de pressage à chaud de pièces en matériau réfractaire comportant un élément constitué en un matériau résistant aux hautes températures tel que le graphite et dont certains aménagements permettent d'obtenir une anisotropie thermique.

**DE-A-2** **731** **535** décrit un ensemble de moulage en matériau plastique refroidi par des fils métalliques noyés dans la masse dont les extrémités plongent dans un fluide réfrigérant contenu dans une chambre et qui assurent également la résistance mécanique de l'ensemble.

Un dispositif de moulage pour pressage à chaud de pièces répondant aux conditions d'utilisation précitées sans présenter les inconvénients des solutions connues est caractérisé en ce qu'au moins un de ses éléments est constitué en un matériau composite résistant aux hautes températures, à fibres longues à conductivité thermique élevée, par exemple à base de carbone, et qui sont orientées de manière à conduire la chaleur à partir des bords de pièce exposés aux moyens de chauffage vers le centre de la pièce, notamment dans le cas d'une pièce axisymétrique, ladite disposition des fibres étant en outre déterminée de façon à ce que ledit élément présente des propriétés de résistance mécanique adéquate aux efforts de compression.

Avantageusement, ledit élément est également utilisé au moment du refroidissementde la pièce pressée à chaud de manière à accélérer le refroidissement des zones de pièce le plus éloignées des bords externes.

Avantageusement, ledit élément est constitué soit par le moule proprement dit, soit par des éléments intermédiaires coopérant avec un moule classique de type isotrope.

D'autres caractéristiques et avantages de l'invention seront mieux compris à la lecture de la description qui va suivre d'un mode de réalisation d'un moule de pressage à chaud de pièces conforme à l'invention ainsi que d'un exemple d'utilisation dudit moule, en référence aux dessins annexés sur lesquels :
- la figure 1 représente une vue schématique d'un ensemble de pressage à chaud de pièces comportant un dispositif de moulage selon un premier mode de réalisation de l'invention ;
- les figures 2, 3 et 4 montrent des vues schématiques en coupe de moules de pressage à chaud conformes à l'invention.
- la figure 5 montre une vue partielle schématique en coupe d'un dispositif de moulage selon un deuxième mode de réalisation de l'invention.

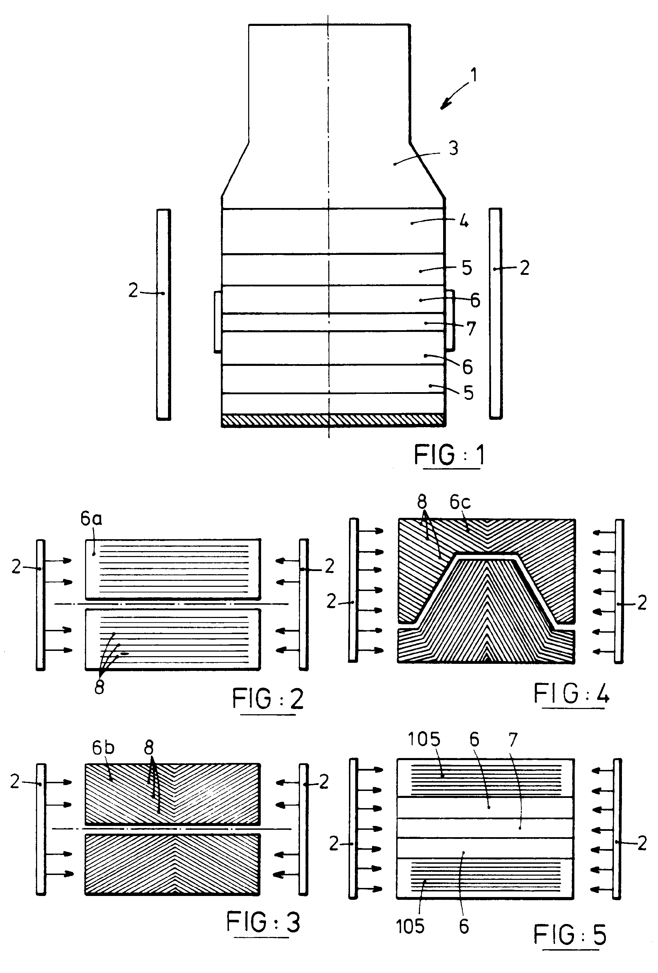

Un ensemble 1 de pressage à chaud représenté sur la figure 1 et utilisé pour réaliser des opérations de mise en forme de pièces, notamment en matériau composite céramique, telles que des pièces en fibres SiC dans une matrice en verre destinées à des applications sur parties chaudes de moteurs aéronautiques, est associé à des moyens de chauffage symbolisés en 2 et comporte des moyens de pressage à vérin 3 associés à des éléments d'isolation thermique 4 et agissant sur des matrices 5 . Entre lesdites matrices 5 est placé un moule de pressage 6 qui contient une ébauche 7 de la pièce à obtenir.

De manière remarquable et selon un premier mode de réalisation de l'invention, ledit moule 6 de pressage est constitué en un matériau possédant des propriétés de conductivité thermique anisotrope. Le matériau utilisé, par exemple dans l'application relevée ci-dessus à la mise en forme de pièces en matériau composite à fibres SiC dans une matrice en verre, peut notamment être en matériau composite du type carbone/carbone à fibres de carbone dans une matrice en carbone. La conductivité thermique parallèlement aux strates du matériau peut dans ce cas être cent fois plus élevée que dans la direction perpendiculaire. Dans une application de mise en forme de pièces en plaques planes axisymétriques, la figure 2 montre un exemple de moule 6a de pressage dont les fibres 8 sont orientées parallèlement au plan moyen de ladite plaque, la structure du matériau du moule 6a étant dans ce cas dite à 2 dimensions. Un matériau de structure plus complexe dite à n dimensions peut être utilisé pour le moule de pressage 6b, comme schématiquement représenté su la figure 3. Dans tous les cas, les orientations des fibres 8 thermiquement conductrices peuvent être adaptées aux formes particulières de pièce à obtenir, comme le montre le moule de pressage 6c pour la mise en forme d'une pièce axisymétrique, tel que représenté sur la figure 4. Dans tous les cas l'anisotropie thermique du matériau constituant les moules de pressage 6 permet un transfert thermique préférentiel à partir des moyens de chauffage symbolisés en 2 vers les zones les plus éloignées de la pièce à mettre en forme. Le même phénomène se reproduit également lors du refroidissement de la pièce et dans ce cas l'extraction des calories du moule est favorisée toujours à partir de zones les plus éloignées des bords externes de la pièce.

Selon un deuxième mode de réalisation de l'invention, qui peut être préféré dans des cas où en fonction des conditions d'application on souhaite conserver un moule de définition classique, notamment en utilisant un matériau à propriétés isotropes, les éléments intermédiaires du dispositif de moulage, tels que les matrices 105 du dispositif de moulage schématisé sur la figure 5, ont une structure semblable à celle qui vient d'être décrite pour le moule 6 dans le premier mode de réalisation représenté sur les figures 1 à 4. Dans ce cas, ce sont lesdits éléments intermédiaires 105 qui ont des propriétés de conductivité réglée et qui sont constitués en un matériau composite à fibres réfractaires conductrices de la chaleur, disposées dans une matrice réfractaire moins conductrice de la chaleur que les fibres, lesdites fibres étant orientées de manière à assurer une propagation de la chaleur, dans un sens ou l'autre, selon des directions préférentielles vers les zones des pièces les plus éloignées des bords externes. Comme précédemment, ces dispositions permettent d'obtenir à tout instant, en cours d'élaboration des pièces, un chauffage ou un refroidissement homogène sur toute la pièce 7.

Dans tous les cas et quel que soit le mode de réalisation retenu, comme illustré notamment sur les figures 2, 3 et 4, le choix de la disposition des fibres 8 et de leur orientation tient compte d'un critère de résistance mécanique adéquate de l'élément 6a, 6b, 6c ou 105 aux efforts de compression lors de l'opération de moulage . Un compromis est recherché entre cette condition mécanique et les résultats thermiques à obtenir, comme noté ci-dessus.

En réduisant les hétérogénéités thermiques de la pièce moulée, tant lors du chauffage et pressage à chaud que lors du refroidissement, l'utilisation d'un moule ou d'éléments intermédiaires du dispositif de moulage conformes à l'invention et tels que décrits ci-dessus permet ainsi d'obtenir une microstructure de matériau identique dans toute la pièce finalement obtenue. En outre, en limitant les gradients thermiques dans la pièce en cours d'élaboration, les contraintes résiduelles dans le matériau de la pièce finale sont également réduites.

Les moules ou éléments intermédiaires du dispositif de moulage conformes à l'invention qui viennent d'être décrits peuvent être fabriqués à partir de techniques de mise en oeuvre connues en soi, notamment par bobinage de fils, enroulement filamentaire ou empilage de tissus.

En-dehors des matériaux composites du type carbone/carbone, éventuellement graphites ou à graphite pyrolitique qui ont été utilisés pour la réalisation de moules servant à une mise en oeuvre d'opération de pressage à chaud sous atmosphère neutre ou sous vide, dans le cas d'applications sous atmosphère oxydante ou réductrice, on peut également envisager l'utilisation de matériaux composites du type carbone/carbone qui ont été soumis à une imprégnation anti-oxydation et/ou à un dépôt en phase vapeur d'un matériau réfractaire, du type SiC par exemple ou celle de matériaux composites à fibres de carbone dans une matrice réfractaire de type SiC. Plus généralement, en fonction des applications et des conditions d'utilisation envisagées, le choix du matériau peut s'orienter vers tout matériau composite à fibres longues, réfractaires, conductrices de la chaleur et à matrice inoxydable, l'orientation desdites fibres étant realisée de la manière particulière conforme à l'invention et décrite ci-dessus.

## Revendications

1. Dispositif de moulage pour le pressage à chaud de pièces en matériau réfractaire caractérisé en ce qu'au moins un de ses éléments (6, 105) est constitué en un matériau composite résistant aux hautes températures, à fibres longues réfractaires, conductrices de la chaleur, disposées dans une matrice réfractaire moins conductrice de la chaleur que les fibres, et orientées de manière à assurer un transfert thermique, dans un sens ou dans l'autre, vers les zones de la pièce (7) les plus éloignées de ses bords externes, permettant ainsi d'obtenir à tout instant un chauffage ou un refroidissement homogène sur toute la pièce (7), ladite disposition des fibres étant en outre déterminée de façon à ce que ledit élément (6, 105) présente des propriétés de résistance mécanique adéquate aux efforts de compression.

2. Dispositif de moulage selon la revendication 1 dans lequel ledit matériau est un matériau composite à fibres (8) de carbone disposées dans une matrice en carbone.

3. Dispositif de moulage selon la revendication 2 dans lequel ledit matériau est un matériau composite à fibres (8) de carbone disposées dans une matrice réfractaire de type SiC.

4. Dispositif de moulage selon l'une quelconque des revendications 1 à 3 dans lequel ledit élément (6, 105) comporte un revêtement protecteur adapté à une utilisation sous une atmosphère particulière, notamment oxydante.

5. Dispositif de moulage selon l'une quelconque des revendications 1 à 4 dans lequel ledit élément à structure définie est un moule séparé (6) en contact direct avec ladite pièce (7).

6. Dispositif de moulage selon l'une quelconque des revendications 1 à 4 dans lequel ledit élément à structure définie est un élément intermédiaire (105) en contact direct avec un moule (6) qui est constitué d'un matériau classique à propriétés isotropes.

## Patentansprüche

1. Formvorrichtung zum Heißpressen von Gegenständen aus feuerfestem Werkstoff, dadurch gekennzeichnet, daß mindestens eines von den Einzelteilen (6,105) aus einem gegen hohe Temperaturen beständigen Verbundwerkstoff gebildet ist, der lange, hitzefeste und die Wärme leitende Fasern in einer die Wärme weniger als die Fasern leitenden hitzefesten Matrix enthält und wobei die Fasern zur Sicherung eines wärmetransports in Richtung auf die am weitesten entfernten Bereiche des Gegenstandes (7) orientiert sind, um so eine unverzügliche Erwärmung oder homogene Abkühlung vom gesamten Gegenstand (7) zu erreichen, sowie die Anordnung der Fasern weiterhin derart geregelt ist, daß die Einzelteile (6, 105) den Druckbeanspruchungen adäquate mechanische Festigkeits-Eigenschaften aufweisen.

2. Formvorrichtung gemäß Anspruch 1, dadurch gekennzeichnet, daß der Werkstoff ein Verbundwerkstoff mit in einer Kohlenstoff-Matrix angeordneten Kohlenstoff-Fasern (8) ist.

3. Formvorrichtung gemäß Anspruch 2, dadurch gekennzeichnet, daß der Werkstoff ein Verbundwerkstoff mit in einer hitzefesten Matrix vom SiC-Typ angeordneten Kohlenstoff-Fasern (8) ist.

4. Formvorrichtung gemäß einem der Ansprüche 1 bis 3, wobei die Einzelteil (6, 105) einen an die Anwendung in einer speziellen, insbesondere oxidierenden Atmosphäre angepaßten Schutzüberzug aufweisen.

5. Formvorrichtung gemäß einem der Ansprüche 1 bis 4, wobei der Einzelteil mit dem definierten Aufbau eine getrennte Form (6) in direkten Kontakt mit dem Gegenstand (7) ist.

6. Formvorrichtung gemäß einem der Ansprüche 1 bis 4, wobei der Einzelteil mit dem definierten Aufbau ein Zwischenteil (105) ist, der in direktem Kontakt mit einer Form (6) steht und aus einem klassischen Material mit isotropen Eigenschaften gebildet ist.

## Claims

1. Moulding device for the hot pressing of refractory-material components, characterized in that at least one of its elements (6, 105) is made of a composite material withstanding high temperatures, having heat-conducting refractory long fibres which are arranged in a refractory matrix less heat-conducting than the fibres and are orientated so as to ensure heat transfer, in either direction, towards the regions of the component (7) which are furthest away from its external edges, thus making it possible to obtain, at any moment, heating or cooling which is uniform over the entire component (7), the said arrangement of the fibres furthermore being determined so that the said element (6, 105) has properties of adequate mechanical resistance to the compressive forces.

2. Moulding device according to Claim 1, in which the said material is a composite material having carbon fibres (8) arranged in a carbon matrix.

3. Moulding device according to Claim 2, in which the said material is a composite material having carbon fibres (8) arranged in a SiC-type refractory matrix.

4. Moulding device according to any one of Claims 1 to 3, in which the said element (6, 105) includes a protective coating suitable for use in a particular atmosphere, especially an oxidizing one.

5. Moulding device according to any one of Claims 1 to 4, in which the said element having a defined structure is a separate mould (6) in direct contact with the said component (7).

6. Moulding device according to any one of Claims 1 to 4, in which the said element having a defined structure is an intermediate element (105) in direct contact with a mould (6) which is made of a conventional material having isotropic properties.
